## Europäisches Patentamt

## European Patent Office

## Office européen des brevets

(11) Publication number: **0 192 430**
**B1**

(12) **EUROPEAN PATENT SPECIFICATION**

(45) Date of publication of patent specification: **03.01.90**

(51) Int. Cl.⁵: **D 02 G 3/48,** D 07 B 1/06, B 60 C 9/00

(21) Application number: **86301019.5**

(22) Date of filing: **14.02.86**

(54) Improvements in or relating to automobile tyres.

(30) Priority: **14.02.85 JP 28088/85**

(43) Date of publication of application:
**27.08.86 Bulletin 86/35**

(45) Publication of the grant of the patent:
**03.01.90 Bulletin 90/01**

(84) Designated Contracting States:
**DE FR GB**

(56) References cited:
**GB-A-2 028 393**
**JP-A-54 151 655**
**JP-A-57 155 103**
**US-A-4 268 573**

(73) Proprietor: **Toyo Tire & Rubber Company Limited**
**17/18, Edobori 1-chome**
**Nishi-Ku Osaka-Shi Osaka-Fu (JP)**

(72) Inventor: **Takahira, Kouji**
**225-15 Sugawaracho**
**Nara-shi, Nara-ken (JP)**

(74) Representative: **Blanco White, Henry Nicholas et al**
**ABEL & IMRAY Northumberland House 303-306 High Holborn**
**London WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an automobile tyre reinforced with steel cords, and especially to an improvement in the construction of the steel cords.

There has been known an automobile tyre whose carcass, belts or chafers are reinforced with bunched and twisted steel cords which are made at a single process by supplying a plurality of filaments to a Buncher twisting machine. Within a steel cord of bunched and twisted type, a plurality of filaments forming at least two layers are twisted in the same direction with the same pitch, and each filament forms a coil of constant diameter. Accordingly, one filament forms part of the core layer everywhere along the length of the cord, while another filament always forms part of an intermediate layer. As a result, the filaments which never compose an outermost layer are liable to come off. When such a filament comes off into the inside of a tyre during tyre travel, it can cause puncture or air-leakage. On the other hand, when such a filament comes off on the outside of a tyre, it may form a hole that permits the penetration of water which rusts the steel cords. Examples of previously-proposed twisted steel cords are disclosed in JP—A—54—151655 and JP—A—57—155103.

It is an object of the present invention to provide a steel cord for an automobile tyre which has a novel structure that reduces the tendency of filaments composing a layer other than an outermost layer to slip off, without entailing major reconstruction of a twisting machine.

The invention provides an automobile tyre reinforced with steel cords of at least two layers, comprising a number of steel filaments that have the same twisting direction and the same twist pitch and describe coils about the centre-line of the cord, characterised in that such coils vary in diameter along the cord and such filaments intersect with each other, a filament forming part of one layer at one position and at least another adjacent layer at another position.

The invention also provides a cord of at least two layers, comprising a number of steel filaments that have the same twist direction and the same twist pitch and describe coils about the centre-line of the cord, characterised in that such coils vary in diameter along the cord and such filaments so intersect with each other, a filament forming part of at least two adjacent layers at different positions along the cord.

A cord according to the invention may be used for the reinforcement of carcass, belts or chafers of an automobile tyre.

Because each of the filaments forms a coil having an uneven diameter in the lengthwise direction of a cord, one filament, for example, composing a core layer of a steel cord at one part and composing an adjacent intermediate or outer layer at another part and filaments crossing with each other, a core filament has a great resistance against slipping-off. Accordingly, a core filament of the core layer is less likely than with previously proposed cords to come off into the inside of a tyre or outside of a tyre during tyre travel. Further, the interlacement of the filaments prevents "bird-caging" which means a compressive strain on the filaments causing them to open radially away from the centre-line of a cord. The direction and pitch of twist are kept unchanged, that is, each of the filaments is twisted in the same direction and with the same pitch so that a Buncher twisting machine is applicable to make the steel cords of the present invention only by arranging a supply tension of each filament. The arrangement of a supply tension of the filaments may be effected, for example, by rotating eccentrically a guide roller for supplying a filament to change a bending angle of the filament or by changing an applied voltage to an electro-magnetic brake used for setting a tension of the filament. A filament given a high tension tends towards the core layer and a filament given a low tension tends towards an outer layer and thereby the steel cords of the present invention are obtained. Further, for example, a steel cord of 3 + 9, in accordance with the present invention, which is composed of a core layer of one bundle of three filaments and an outer layer of nine filaments may be obtained by applying uneven tension as mentioned above to one bundle of 12 filaments, 1 × 12 while supplying them to a twisting machine in a manner as composing a steel cord of 4 + 8, a core layer of four filaments, an outer layer of eight filaments. The diameter of the filaments used is preferably 0.10 to 0.40 mm.

Two forms of cord according to the invention, two forms of previously proposed cord, and various tyres incorporating them, will now be described by way of example with reference to the accompanying drawings, in which.

Fig. 1(a) is a partial diagrammatic view of a front elevation of one form of cord according to the invention;

Fig. 1(b) to (e) are cross-sectional views taken along the lines B—B, C—C, D—D and E—E, respectively, in Fig 1 (a);

Fig. 2(a) is a partial diagrammatic view of a front elevation of another forms of cord in accordance with the invention;

Fig. 2(b) to (f) are cross-sectional views taken along the lines B—B, C—C, D—D, E—E, and F—F, respectively, in Fig. 2(a);

Fig. 2(g) is a partial diagrammatic front elevation view of one filament 11 positioned in an outer layer in Fig. 2(b);

Fig. 3(a) is a partial diagrammatic front elevation view of a first form of previously proposed cord;

Fig. 3(b) to (e) are cross-sectional views taken along the lines B—B, C—C, D—D, and E—E, respectively, in Fig. 3(a);

Fig. 4(a) is a partial diagrammatic front elevation view of a second form of previously proposed cord;

Fig. 4(b) to (f) are cross-sectional views taken along the lines B—B, C—C, D—D, and E—E, respectively, in Fig. 4(a);

Fig. 4(g) is a partial diagrammatic front elevation view of one filament 12 positioned in an outer layer in Fig. 4(b); and,

Fig. 4(h) is a partial diagrammatic front elevation view of one filament 11 positioned in a core layer in Fig. 4(b).

## Embodiment 1

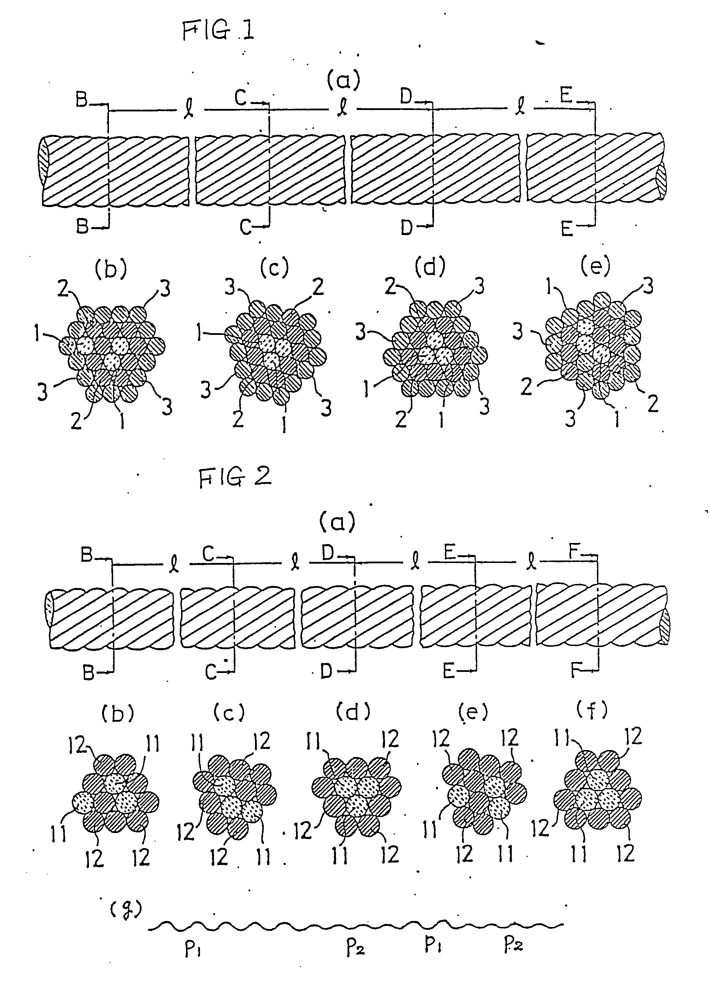

Referring to Fig. 1 of the accompanying drawings, to produce a first form of cord according to the invention (Embodiment 1), twenty-seven steel filaments of 0.175 mm gauge in diameter were supplied to a Buncher twisting machine. A tension given to the filaments was varied within the range of 650 ± 180 g by regulating a voltage applied to an electromagnetic brake. A steel cord of 1.10 mm in diameter was thus obtained which had a three-layer construction of S twist and 12 mm pitch in each layer.

In the cross-sectional views, Figs. 1(b) to 1I(e), which are taken at intervals $l$ of 50 mm in the longitudinal direction, it may be seen that three filaments. 1 composing a core layer at D—D also composed a core layer at C—C which is 50 mm to the left (as seen in Fig. 1(a)) from D—D, but at B—B, 200 mm to the left of D—D and E—E, 50 mm to the right of D—D, two of those three filaments were in the core layer and the third filament was in an intermediate layer.

One of nine filaments 2 composing the intermediate layer at D—D moved into an outer layer at C—C, 50 mm to the left, and one of the nine filaments moved into the core layer at B—B, 200 mm to the left. At E—E, 50 mm to the right, one of the nine filaments has moved into the core layer and another one has moved into the outer layer. One of fifteen filaments 3 composing the outer layer at D—D has moved into the intermediate layer at C—C, 50 mm to the left. At B—B, 100 mm to the left, all fifteen of the filaments 3 are in the outer layer but at E—E, 50 mm to the right of D—D, one filament is in the intermediate layer.

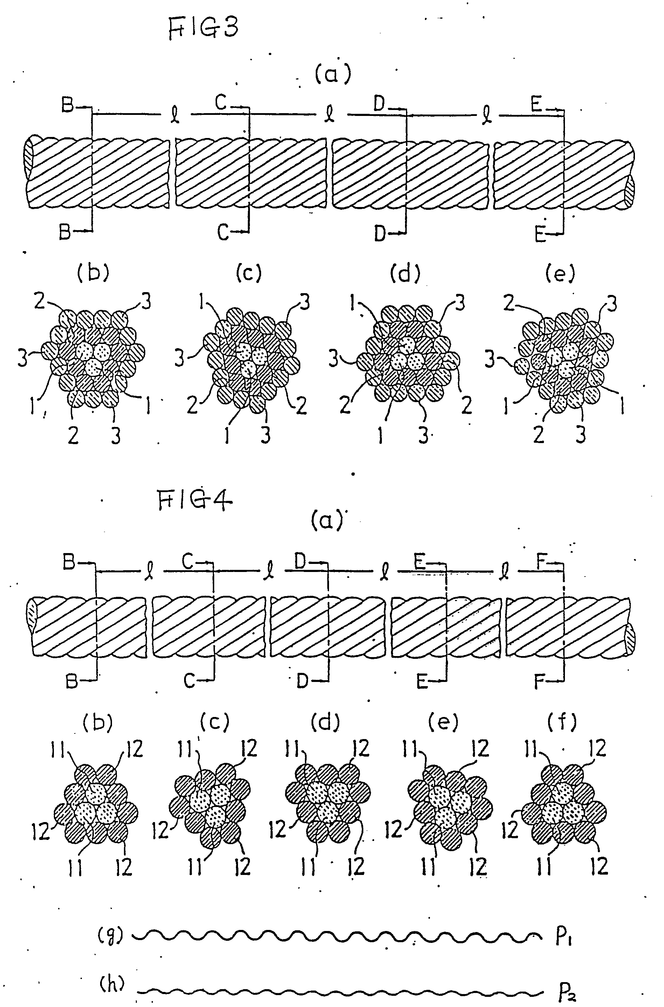

Referring now to Fig. 3, a first steel cord of previously proposed bunched and twisted type (Comparison 1) was prepared under the same conditions except that a tension of filaments was set evenly in the range of 650 ± 35 g. As may be seen from Figs. 3(b) to 3(e), three filaments 1 composing a core layer at D—D always composed a core layer. Nine filaments 2 for an intermediate layer and fifteen filaments 3 for an outer layer always composed an intermediate layer and an outer layer respectively.

Shown in Table 1 are the results of tensile tests conducted upon the steel cords of Embodiment 1 and Comparison 1.

Slipping-off resistance was measured as follows.

The steel cords were first cut to a length of 200 mm. At one end portion 50 mm in length, the intermediate layer and the outer layer were cut off while keeping the core layer of three filaments as they were. At another end portion of 50 mm in length, the intermediate layer and the outer layer were first disassembled, the three filaments of the core layer were cut off, and thereafter the intermediate and outer layers were twisted again. A specimen thus obtained was clamped by the chuck of a tensile tester at each end and measurements were made when slipping-off occured under a separation rate of 5cm/min.

Concerning the steel cord of Embodiment 1, the filaments of the core layer broke before they came off, and the breaking strength is shown for the slipping-off resistance.

### TABLE 1

|  | Embodiment 1 | Comparison 1 |
|---|---|---|
| Strength (kg) | 181 | 179 |
| Elongation (%) | 2.78 | 2.69 |
| Cord weight (g/m) | 5.14 | 5.14 |
| Slipping-off resistance (kg) | 20.1 | 0.29 |

As may be understood from the above Table 1, although the cord weight, strength and elongation are almost the same between Embodiment 1 and Comparison 1, the slipping-off resistance is remarkably different between them. The slipping-off resistance of Embodiment 1 is approximately 70 times that of Comparison I.

Twenty tyres of 2000 R 20—14 PR were produced using the steel cords of the above Embodiment 1 and twenty using the steel cords of Comparison 1 for the reinforcement of carcass, with a density of 13/2.5 cm and with a radial arrangement of 90°. For the belts, conventional steel cords of 3 × 0.20 + 6 × 0.35 were used with a density of 13/2.54 cm and with the arrangement of four plies having the cord angle of 20° in each ply. Conventional steel cords of 3 + 9 × 0.23 were used for chafers with the density of 13/2.54 cm.

Each tyre of Embodiment 1 and Comparison 1 was mounted to a 11 ton-load truck with an inflation pressure of 7.25 kg/cm². The truck was loaded with 33 ton of concrete blocks and was driven at a speed of 60 km/h on an asphalt road of a tyre-testing course. A running distance was measured until each test tyre became unusable. Test results are shown in Table 2.

TABLE 2

|  | Embodiment 1 | Comparison 1 |
| --- | --- | --- |
| Average running distance (km) | 59,730 | 17,620 |
| Causes of unusability/Number of tyres Treadwear | 20 | — |
| Slipping-off at shoulder | — | 13 |
| Puncture | — | 2 |
| Cord breakage | — | 5 |
| Retention strength (%) | 80 | 65 |

In the above Table 2, "slipping-off at shoulder" means that filaments came off at shoulders, and "Cord breakage" implies that steel cords were broken by the increase of fatigue which was caused by air-leakage due to the slipping-off of filaments into the inside of the tyre. "Retention of strength" is a ratio of the strength of steel cords between before and after tyre testing.

As is apparent from Table 2, the tyre of Embodiment 1 never became unusable by reason of trouble with the steel cords and the tyre life was approximately 3.4 times as long as that of Comparison 1.

## Embodiment 2

Referring now to Fig. 2, to produce a second form of tyre according to the invention (Embodiment 2) twelve steel filaments of 0.23 mm gauge in diameter were supplied to a Buncher twisting machine. A tension given to the filaments was changed by rotating eccentrically, with an eccentricity of 2 mm, a guide roller of 10 cm diameter. A steel cord of 0.93 mm in diameter was thus obtained which had a two-layer construction of S twist and 10 mm pitch in each layer.

In the cross-sectional views (Figs. 2(b) to 2(f), which are taken at intervals $l$ of 50 mm in the longitudinal direction, it may be seen that one of three filaments 11 composing a core layer at D—D has moved into an outer layer, while remaining in contact with another filament 11, at C—C, 50 mm to the left of D—D as seen in Fig. 2(a). At B—B, a further 50 mm to the left, one of the three filaments 11 is in the outer layer and not in contact with the remaining two filaments. At E—E, 50 mm to the right of D—D, two of the three filaments have moved into an outer layer, separated from each other, and at F—F, a further 50 mm to the right, the three filaments compose the core layer again.

One of nine filaments 12 composing the outer layer at D—D has moved into the core layer at C—C and at B—B to the left, and all nine of the filaments compose again an outer layer at F—F.

As shown in Fig. 2(g) which illustrates a partial view of the filament 11 that is positioned in the outer layer in Fig. 2(b), said filament shows a large amplitude $P_1$ at the portion where it is in the outer layer and a small amplitude $P_2$ at the portion where it is in the core layer.

Referring now to Fig. 4, a second steel cord of previously proposed bunched and twisted type (Comparison 2) was prepared under the same conditions as for Embodiment 2 except that the guide roller was not made eccentric. As may be seen from the cross sections, Figs. 4(b) to 4(f), three filaments 11 composing a core layer at D—D always composed a core layer. Nine filaments 12 composing an outer layer at D—D always composed an outer layer. As shown in Figs. 4(g) and 4(h) which are partial views of a filament positioned in an outer layer and having a large amplitude $P_1$ and of a filament positioned in a core layer having a small amplitude $P_2$, respectively, each filament showed no change in amplitude and pitch.

Shown in Table 3 are the results of tensile tests conducted upon the steel cords of Embodiment 2 and Comparison 2 in the same manner as described in conjunction with Embodiment 1. The breaking strength is shown for the slipping-off resistance of Embodiment 2 as in the case of Embodiment 1.

TABLE 3

|  | Embodiment 2 | Comparison 2 |
|---|---|---|
| Strength (kg) | 145 | 143 |
| Elongation (%) | 2.83˙ | 2.76 |
| Cord weight (g/m) | 4.00 | 4.03 |
| Slipping-off resistance (kg) | 36.0 | 2.1 |

Test tyres of 2000 R 20—14PR were produced using the steel cords of the above Embodiment 2 and the steel cords of Comparison 2 for the reinforcement of belts respectively, with the density of 17/2.54 cm. For the carcass, conventional steel cords of 3 + 9 + 15 × 0.175 + 1 were used with the density of 13/2.54 cm. Chafers were the same as in Embodiment 1.

Each of test tyres of Embodiment 2 and Comparison 2 was subjected to drum test at a speed of 120 km/h with an inflation pressure of 7.5 kg/cm² and under a standard load according to JIS.

Tyres according to Embodiment 2 showed no failure after 300 hours running. On the contrary, tyres of Comparison 2 showed slipping-off of filaments at a shoulder portion at a running time of 1.3 hours and tyre testing was stopped.

Embodiment 3

Further test tyres (Embodiment 3 and Comparison 3) were produced in the same manner as described in conjunction with Embodiment 2 except that the chafers were composed of the steel cords of Embodiment 2 and the steel cords of Comparison 2, respectively, with a density of 13/2.54 cm in each case. Drum tests were conducted with an inflation pressure of 9.0 kg/cm², under a load of 2.3 times as heavy as a standard load according to JIS and at a running speed of 20 kg/h.

Test tyres of Embodiment 3 yielded no failure after tyre running of 300 hours, but test tyres of Comparison 3 yielded a bead separation due to slipping-off of the filaments at a rim flange at tyre running of 268 hours.

In the description heretofore, embodiments are described in which carcass, belts and chafers are reinforced with the steel cords according to the invention or conventional steel cords, but organic synthetic fibre cords could be used for the reinforcement of them together with the steel cords according to the invention instead of conventional steel cords.

**Claims**

1. An automobile tyre reinforced with steel cords of at least two layers, comprising a number of steel filaments that have the same twisting direction and the same twist pitch and describe coils about the centre-line of the cord, characterised in that such coils vary in diameter along the cord and such filaments intersect with each other, a filament forming part of one layer at one position and at least another adjacent layer at another position.

2. An automobile tyre as claimed in claim 1, wherein the diameter of the said filaments is in the range of from 0.10 to 0.40 mm.

3. An automobile tyre as claimed in claim 1 or claim 2, wherein said steel cords reinforce a carcass layer.

4. An automobile tyre as claimed in any one of claims 1 to 3, wherein said steel cords reinforce belts.

5. An automobile tyre as claimed in any one of claims 1 to 4, wherein said steel cords reinforce chafers.

6. A cord of at least two layers, comprising a number of steel filaments that have the same twist direction and the same twist pitch and describe coils about the centre-line of the cord, characterised in that such coils vary in diameter along the cord and such filaments so intersect with each other, a filament forming part of at least two adjacent layers at different positions along the cord.

7. A cord as claimed in claim 6, wherein the said steel filaments have a diameter in the range of from 0.10 to 0.40 mm.

**Patentansprüche**

1. Ein Luftreifen für einen Kraftwagen, der mit mindestens zwei Lagen aus Stahlseilen verstärkt ist, die eine Anzahl von Stahlfilamenten enthält, die die gleiche Wicklungsrichtung und die gleiche Wicklungssteigung haben und Windungen um die Zentrallinie des Seiles beschreiben, dadurch gekennzeichnet daß solche, Wicklungen in ihrem Durchmesser entlang des Seiles variieren und solche Filamente sich miteinander überschneiden, ein Filament ein Teil von einer Lage in einer Position und zumindest eine andere benachbarte Lage in einer anderen Position bildet.

**2.** Ein Luftreifen für einen Kraftwagen nach Anspruch 1, dadurch gekennzeichnet, daß der Durchmesser der Filamente in einem Bereich von 0,10 bis 0,40 mm liegt.

**3.** Ein Luftreifen für einen Kraftwagen nach einem der Ansprüche 1 oder 2, dadurch gekennzeichnet, daß die Stahlseile eine Mantellage verstärken.

**4.** Ein Luftreifen für einen Kraftwagen nach einem der Ansprüche 1 bis 3, dadurch gekennzeichnet, daß die Stahlseile Gurte verstärken.

**5.** Ein Luftreifen für einen Kraftwagen nach einem der Ansprüche 1 bis 4, dadurch gekennzeichnet, daß die Stahlseile ein Wulstgewebe verstärken.

**6.** Ein Seil aus mindestens zwei Lagen, bestehend aus einer Anzahl von Stahlfilamenten, die die gleiche Wicklungsrichtung und die gleiche Wicklungssteigung haben und Windungen um die Zentrallinie des Seiles beschreiben, dadurch gekennzeichnet, daß sich solche Windungen entlang des Seiles im Durchmesser verändern und solche Filamente einander so überschneiden, daß ein Filament Teil von zumindest zwei benachbarten Lagen an unterschiedlichen Stellen entlang des Seiles bildet.

**7.** Ein Seil nach Anspruch 6, dadurch gekennzeichnet, daß die Stahlfilamente einen Durchmesser im Bereich von 0,10 bis 0,40 mm haben.

## Revendications

**1.** Pneumatique d'automobile renforcé de câbles d'acier d'au moins deux couches, comprenant un certain nombre de filaments d'acier qui ont le même sens de torsion et le même pas de torsion et qui décrivent des enroulements autour de l'axe central du câble, caractérisé en ce que ces enroulements ont un diamètre qui varie le long du câble et ces filaments se coupent mutuellement, un filament faisant partie d'une couche en une position et d'au moins une autre couche adjacente en une autre position.

**2.** Pneumatique d'automobile selon la revendication 1, dans lequel le diamètre desdits filaments est dans la gamme de 0,10 à 0,40 mm.

**3.** Pneumatique d'automobile selon la revendication 1 ou la revendication 2, dans lequel lesdits câbles d'acier renforcent une couche de carcasse.

**4.** Pneumatique d'automobile selon l'une quelconque des revendications 1 à 3, dans lequel lesdits câbles d'acier renforcent des ceintures.

**5.** Pneumatique d'automobile selon l'une quelconque des revendications 1 à 4, dans lequel lesdits câbles d'acier renforcent des bandelettes-talons.

**6.** Câble d'au moins deux couches, comprenant un certain nombre de filaments d'acier qui ont le même sens de torsion et le même pas de torsion et décrivent des enroulements autour de l'axe central du câble, caractérisé en ce que chacun de ces enroulements a un diamètre qui varie le long du câble et ces filaments se coupent mutuellement, un filament formant une partie d'au moins deux couches adjacentes en des positions différentes le long du câble.

**7.** Câble selon la revendication 6, dans lequel lesdits filaments d'acier ont un diamètre dans la gamme de 0,10 à 0,40 mm.

EP 0 192 430 B1

FIG 1

(a)

(b) (c) (d) (e)

FIG 2

(a)

(b) (c) (d) (e) (f)

(g)

$P_1$  $P_2$  $P_1$  $P_2$

1

FIG 3

(a)

(b)　　　(c)　　　(d)　　　(e)

FIG 4

(a)

(b)　　(c)　　(d)　　(e)　　(f)

(g) $P_1$

(h) $P_2$